# EUROPÄISCHE PATENTSCHRIFT

(11) **EP 1 153 805 B1**
(45) Veröffentlichungstag und Bekanntmachung des Hinweises auf die Patenterteilung: **16.01.2008**
(21) Anmeldenummer: 01109739.1
(22) Anmeldetag: 20.04.2001
(51) Int. Cl.: B60R 21/09, B60T 7/06

(54) **Sicherheitseinrichtung für die Lagerung von Pedalen**
Safety device for bearing of pedals
Dispositif de sécurité pour palier de pédales

(30) Priorität: 10.05.2000 DE 10022813
(43) Veröffentlichungstag der Anmeldung: 14.11.2001
(73) Patentinhaber: Daimler AG, 70327 Stuttgart (DE)
(72) Erfinder: Müller, Martin, 71292 Friolzheim (DE); Papenhagen, Dieter, 71364 Winnenden (DE)

(56) Entgegenhaltungen:
- EP-A- 0 788 931
- DE-A- 19 733 512
- GB-A- 2 353 009

## Beschreibung

Die vorliegende Erfindung bezieht sich auf eine Sicherheitseinrichtung für die Lagerung von Pedalen in Kraftfahrzeugen nach dem Oberbegriff des Patentanspruches 1.

Bei einer Frontalkollision eines Fahrzeugs, insbesondere eines Personenkraftfahrzeugs kommt es bei den meisten Fahrzeugen unter anderem zu größeren Verformungen und Verschiebungen der den Fahrgastraum vom Motorraum trennenden sogenannten Spritz- oder Querwand in den Fahrgastraum hinein.

Häufig sind die Pedale zur Betätigung des Fahrzeugs, d.h. das Fußhebelwerk, an dem sich bei einer Frontalkollision des Fahrzeugs spürbar in den Fahrgastraum hinein verformenden wandbereich, eben dieser Spritz- oder Querwand, befestigt.

An sich würde somit das Fußhebelwerk mit den daran angelenkten Pedalen bei einer Frontalkollision des Fahrzeugs ebenfalls tiefer in den Fahrgastraum hineinbewegt werden und dadurch würde sich das Verletzungsrisiko für den Fahrzeuglenker beträchtlich erhöhen.

Daneben ist es jedoch auch denkbar, daß eine Verformung des Fahrzeuges derart stattfindet, daß sich der Fahrerfuß unter einem Pedal verklemmt und es dadurch zu unerwünschten Beeinträchtigungen des sich auf dem Fahrersitz befindlichen Insassen kommen kann.

Um derartige Beeinträchtigungen, insbesondere Fußverletzungen des Insassen zu vermeiden, ist es beispielsweise aus der DE 4 409 235 A1 bekannt, die Pedalachse an der fahrzeugfesten Aufnahme in einem Widerlager zu haltern, welches die Pedalachse bei einem Frontalunfall im Zusammenwirken mit einem an einem fahrzeugfesten Querträger abgestützten Entriegelungsmechanismus selbsttätig freigibt. Nachteilig bei dieser Pedallagerung ist jedoch, daß sie relativ aufwendig in der Herstellung ist und sehr viel Bauraum im Kraftfahrzeug beansprucht, so daß dadurch die Herstellungskosten und auch die Betriebskosten des Kraftfahrzeuges stark erhöht werden.

Ein Sicherheitsfußhebelwerk ist aus dem DE 19733512 bekannt, das als nachstligender Stand der Technik angesehen wird.

Daneben ist es beispielsweise aus der deutschen Offenlegungsschrift DE 4 409 324 bekannt, ein Sicherheitsfußhebelwerk derart zu gestalten, daß die Pedale des Fußhebelwerkes schwenkbar auf einer Pedalachse gelagert sind, welche ihrerseits im Grunde einer sich zumindest annähernd vertikal erstreckenden schlitzförmigen Kulissenführung des Lagerbocks gehaltert ist und bei einer kollisionsbedingten Verlagerung des Lagerbocks in Richtung Querträger durch ein an ihr angreifendes und mit Umlenkrollen zusammenwirkendes Seil oder kettenförmiges Kraftübertragungsglied in der Kulissenführung selbsttätig nach oben gezogen wird. Dadurch wird das Pedal bzw. werden die Pedale aus dem Fußraum des Fahrzeuges nach oben in für den Fahrzeuglenker ungefährliche Bereiche des Fahrgastraums verlagert, wobei das Pedal und die Druckstange selbsttätig entkoppelt werden. Auch hierbei handelt es sich um eine konstruktiv sehr aufwendige Anordnung, die zu unerwünscht hohen Herstellungskosten führt.

Aus der deutschen Patentschrift DE 196 17 372 ist es darüber hinaus bekannt, das Bremspedal bei einer Frontalkollision pyrotechnisch von seiner Lagerung zu entkoppeln. Bei einer solchen Ausgestaltung hat es sich unter anderem gezeigt, daß aufwendige Sensoren bereitgestellt werden müssen, die bei einer Frontalkollision einen pyrotechnischen Gasgenerator aktivieren und so zu einer Entkoppelung des Pedals von seiner Aufhängung führt.

Auch die europäische Offenlegungsschrift EP 0 827 874 offenbart eine Anordnung, bei der im Falle einer Frontalkollision die Pedalachse aus ihrer Lagerung gelöst werden kann und damit die Pedalachse vom Lagerbock gelöst wird.

Bei der in der deutschen Patentschrift DE 196 31 212 beschriebenen Fahrpedaleinheit werden bei einem Fahrzeugunfall durch das Brechen der Befestigungsbolzen der Pedale am Lagerblock die Pedale freigegeben. Dadurch kann eine Gefährdung des Fahrers durch das feststehende, sich bei einer Frontalkollision in den Fahrgastraum hinein bewegende Pedal verringert werden.

Ebenso wird in der DE 195 01 680 PS ein Fußhebelwerk erläutert, bei dem bei einer Frontalkollision die Pedallagerachse völlig freigegeben wird. Das Pedal ist dann nur noch mit dem Brems- oder Kupplungsseil oder dergleichen verbunden und kann sich ansonsten frei bezüglich des umgebenden Fußraumes bewegen, so daß es bei einem Unfall den Füßen und/oder Beinen des Fahrers ausweichen kann.

Bei diesen aus dem Stand der Technik offenbarten Fußhebeiwerken, bei denen die Pedale bei einer Frontalkollision sich vollständig aus der Pedallagerachse lösen, kann es jedoch nachteilig sein, daß das Pedal nach dem Lösen von seiner Lagerung sich unkontrolliert in dem Fußraum des Fahrzeuges bewegen kann.

Aus der DE 195 01 859 A1 ist daneben eine Sicherheitsanordnung für ein Kraftfahrzeug mit einem Pedalwerk bekannt, bei dem ein Lagerbock des Pedalwerkes an einem Trägerelement befestigt ist, welches von einer den Fahrgastraum nach vorne begrenzenden Spritzwand beabstandet und entkoppelt ist. Das Trägerelement soll sich somit in einer Position im Fahrzeug befinden, die von einem Fahrzeugunfall nicht direkt betroffen ist und daher bei einem Frontalunfall nicht sofort das Pedalwerk weiter in den Fahrgastraum hinein verschiebt. Durch eine Betätigungsstange kann das Pedalwerk bei einem Fahrzeugunfall sogar vom Fahrer weg verschoben werden, wodurch das Verletzungsrisiko des Fahrers verringert wird.

Das in dieser Offenlegungsschrift beschriebene Pedalwerk mit der Betätigungsstange ist jedoch bei einem Fahrzeugunfall keinesfalls sicher und kann Verletzungen des Fahrers nicht wirksam verhindern, da die gesamte Anordnung den bei einem Fahrzeugunfall auftretenden Deformationen ausgesetzt ist und die vorgesehene Wirkungsweise dadurch nicht gewährleistet sein kann. Weiterhin wird durch eine beabstandete Anordnung des Lagerbocks ein relativ großer Bauraum benötigt.

Auch die deutschen Offenlegungsschriften DE 196 52 014 und DE 197 37 114 offenbaren wieder eine Pedallagerung für ein Kraftfahrzeug, die derart vorgesehen sein soll, daß das Pedal bei einem Frontalunfall von seiner Lagerung entkoppelt werden kann.

In einer ähnlichen Art und Weise arbeitet auch das in der WO 97/28029 angegebene Verfahren, worin beschreiben wird, daß die Pedallagerachse von seiner Lagerung mit Hilfe von Auslösemitteln entkoppelt wird, wobei die Auslösemittel durch Sensoren aktiviert werden.

Bei allen aus dem Stand der Technik bekannten Sicherheitseinrichtungen für die Lagerung von Pedalen in Fahrzeugen hat es sich jedoch als nachteilig erwiesen, daß nach dem Auftreten einer Frontalkollision das Pedal teilweise von der Druckstange, jedenfalls aber in allen Fällen vollständig von seiner Lagerung entkoppelt wird, und so beispielsweise ein Bremsen mit dem entsprechenden Bremspedal nicht mehr möglich ist.

Es ist daher Aufgabe der vorliegenden Erfindung, eine Sicherheitseinrichtung für die Lagerung von Pedalen in Kraftfahrzeugen bereitzustellen, bei der auch nach einer Frontalkollision zumindest noch eine Teilbremsung möglich ist.

Diese Aufgabe wird bei einer Sicherheitseinrichtung der eingangs genannten Art gemäß den Merkmalen des Patentanspruches 1 gelöst.

Die Sicherheitseinrichtung für die Lagerung von Pedalen in Kraftfahrzeugen, mit einem Lagerbock, der in einem sich bei einer Frontalkollision des Fahrzeugs spürbar in einen Fahrgastraum hinein verformenden wandbereich einer Spritz- oder Querwand angeordnet ist, wobei in dem Lagerbock eine Pedalachse mindestens eines auf eine Druckstange einwirkenden, schwenkbaren Pedals gehaltert ist, wobei die Pedalachse im Lagerbock in einer sich zumindest im Wesentlichen horizontal erstreckenden Führung gehaltert ist, wobei die Führung in horizontaler Richtung jeweils Begrenzungen aufweist und wobei die Pedalachse während des Normalbetriebes in einer in Vorwärtsfahrtrichtung gesehen vorderen Position der Führung mittels einer Fixierung gehalten ist, zeichnet sich dadurch aus, dass die gegenüber den Führungsbegrenzungen separate Fixierung bei einer Frontalkollision aufgehoben wird, so dass das Pedal nicht mehr fixiert gelagert ist und sich die Pedalachse zwischen den Führungsbegrenzungen bewegen kann.

Durch eine solche Anordnung ist es möglich, dass das Pedal bei einer Frontalkollision nicht mehr fixiert gelagert ist, sondern eine gewisse Ausweichmöglichkeit in Richtung des Fahrzeuginnenraumes hat. Jedoch wird es nicht derart abgetrennt, dass die Verbindung zu einer Druckstange vollständig verloren geht oder das Pedal nur noch an dieser befestigt ist, und es deswegen um diese Befestigung haltlos pendelt. Dadurch ist es möglich, dass auch nach Lösung der Fixierung zumindest eine Teilbremsung durch die Lagerung in der Führung und die Befestigung an der Bremsstange noch möglich ist.

Weiterhin ist bei einer solchen Sicherheitseinrichtung vorteilhaft, dass das von seiner fixierten Lagerung gelöste Pedal nicht unkontrolliert im Fußraum herumpendelt, sondern sich kontrolliert im Fußraum bewegt.

Hierbei ist zu beachten, dass eine Frontalkollision, wie sie hier des Öfteren erwähnt wird, jede Art von Kollision umfassen soll, bei der Verformungen im Frontalbereich des Fahrzeuges auftreten können. Dies bedeutet, dass es sich dabei beispielsweise auch um sekundäre Frontalkollisionen handeln kann und nicht unbedingt um primäre Frontalkollisionen handeln muss.

Es versteht sich weiterhin, dass die Teilbremsung, die gemäß der vorliegenden Erfindung auch nach einem Unfall erhalten bleibt, nicht bei jeder beliebigen Unfallschwere erhalten bleiben kann. Findet eine sehr starke Frontalkollision statt, kann auch die Lagerung der Pedale gemäß der vorliegenden Erfindung derart zerstört sein, dass ein Bremsen nicht mehr möglich ist. Bei einer solch hohen Unfallschwere wird eine Bremsung aber auch nicht mehr erwünscht sein.

Insbesondere hat es sich als vorteilhaft gezeigt, wenn die Sicherheitseinrichtung derart ausgestaltet ist, dass die Fixierung durch die relative Bewegung des Lagerbockes zu einem seine räumliche Lage auch bei einer Frontalkollision im wesentlichen unverändert beibehaltenden Fahrzeugteil aufgehoben wird.

Bei einer solchen Ausgestaltung ist es insbesondere vorteilhaft, dass keine gesonderten Auslösemechanismen für die Fixierung vorgesehen sein müssen, sondern einfach durch eine bei einem Frontalunfall relative Bewegung die Fixierung ausgelöst werden kann.

Weitere Vorteile und vorteilhafte Ausgestaltungen der Erfindung ergeben sich aus den Patentansprüchen und dem anhand der Zeichnung prinzipmäßig beschriebenen Ausführungsbeispiel.

Es zeigt hierbei :
- Fig. 1: eine dreidimensionale Ansicht einer erfindungsgemäßen Sicherheitseinrichtung in ihrer Normalstellung;

- Fig. 2: einen vergrößerten Ausschnitt des Bereichs der Lagerung der Pedalachse aus Fig. 1 in einer teilweise geschnittenen Ansicht;
- Fig. 3: eine seitliche Darstellung der erfindungsgemäßen Sicherheitseinrichtung in ihrer Normalstellung;
- Fig. 4: eine Darstellung entsprechend Fig. 3, wobei das Pedal in einer Stellung nach Auslösung der erfindungsgemäßen Sicherheitseinrichtung gezeigt ist; und
- Fig. 5: eine Draufsicht auf eine Darstellung der Sicherheitseinrichtung entsprechend der Fig. 2, wobei auf einer Seite ein Auslösehebel dargestellt ist und auf der anderen Seite nicht.

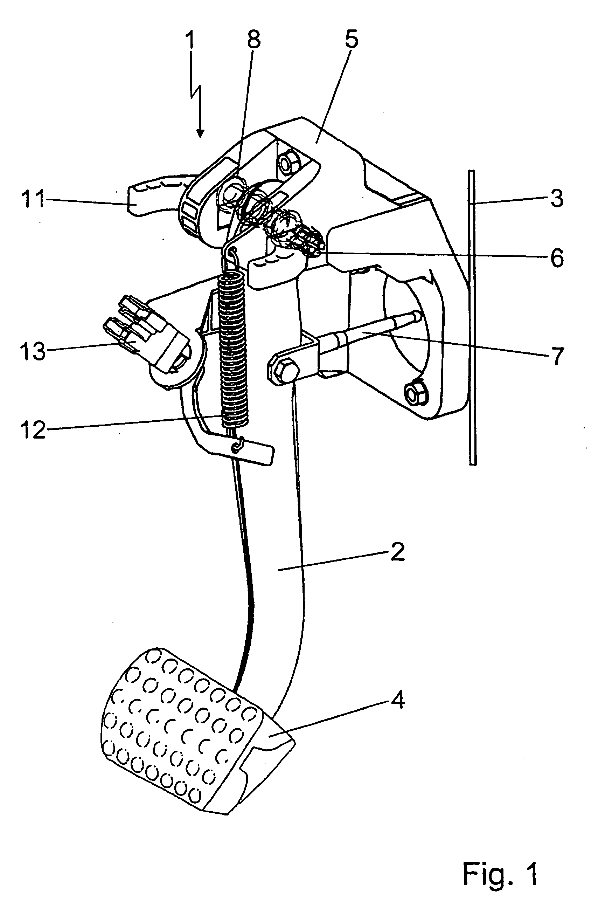

Bezug nehmend auf Fig. 1 ist eine Sicherheitseinrichtung 1 in ihrer Normalstellung, also ohne daß eine Frontalkollision stattfand, gezeigt. Eine solche Sicherheitseinrichtung dient zur Lagerung von Pedalen 2 in Kraftfahrzeugen, mit einem Lagerbock 5, der in einem sich bei einer Frontalkollision des Fahrzeugs deutlich in einen Fahrgastraum hinein verformenden Wandbereich einer Spritz- oder Querwand 3 angeordnet ist. In dem Lagerbock 5 ist eine Pedalachse 6 mindestens eines auf eine Druckstange 7 einwirkenden, schwenkbaren Pedals 2, insbesondere eines Bremspedals mit einer Trittplatte 4, gehaltert.

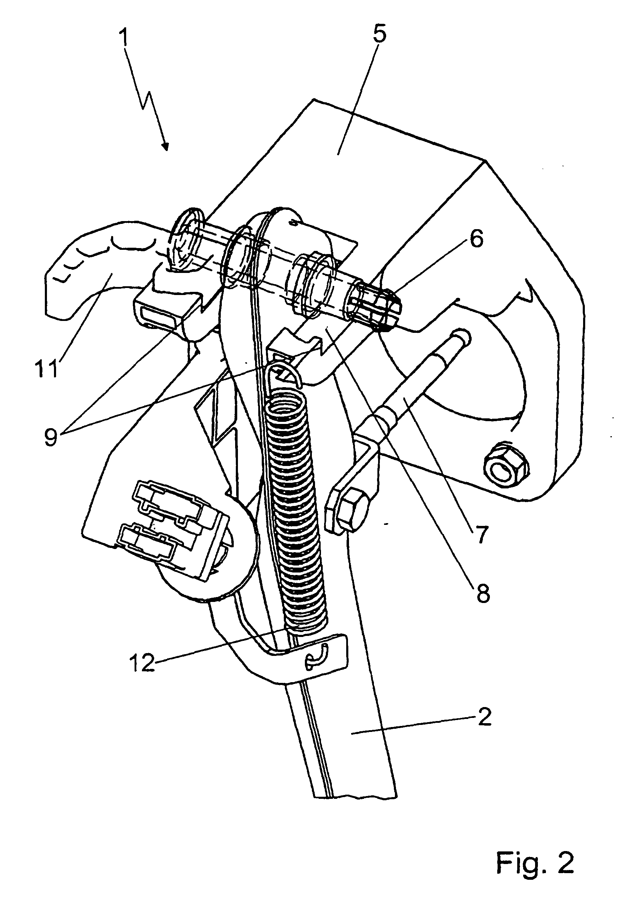

Der Fig. 2, die einen vergrößterten Ausschnitt des Bereichs der Lagerung der Pedalachse 6 aus Fig. 1 zeigt, und bei der der Lagerbock im Bereich der Lagerung der Pedalachse geschnitten ist, kann entnommen werden, daß die Pedalachse 6 im Lagerbock 5 in einer sich zumindest im wesentlichen horizontal erstreckenden Führung 8 gehaltert ist. Diese Führung 8 weist in horizontaler Richtung jeweils Begrenzungen 9 auf. In der in Fig. 2 gezeigten Grundstellung ist die Pedalachse 6 wie auch in Fig. 1 während des Normalbetriebes in einer in Vorwärtsfahrtrichtung gesehen vorderen Position der Führung 8 fixiert.

Weiterhin ist in der Fig. 1 und Fig. 2 auch eine Rückzugfeder 12 gezeigt, die dazu dient, beim Lösen der Bremse, d.h. nachdem die Belastung durch den Fuß des Fahrers vom Pedal 2 genommen wurde, das Pedal 2 wieder in seine Grundstellung zu bringen und so weiter keinen Druck auf die Druckstange 7 auszuüben. Wird die Bremse aktiviert, wird über den Bremslichtschalter 13 das Bremslicht aktiviert.

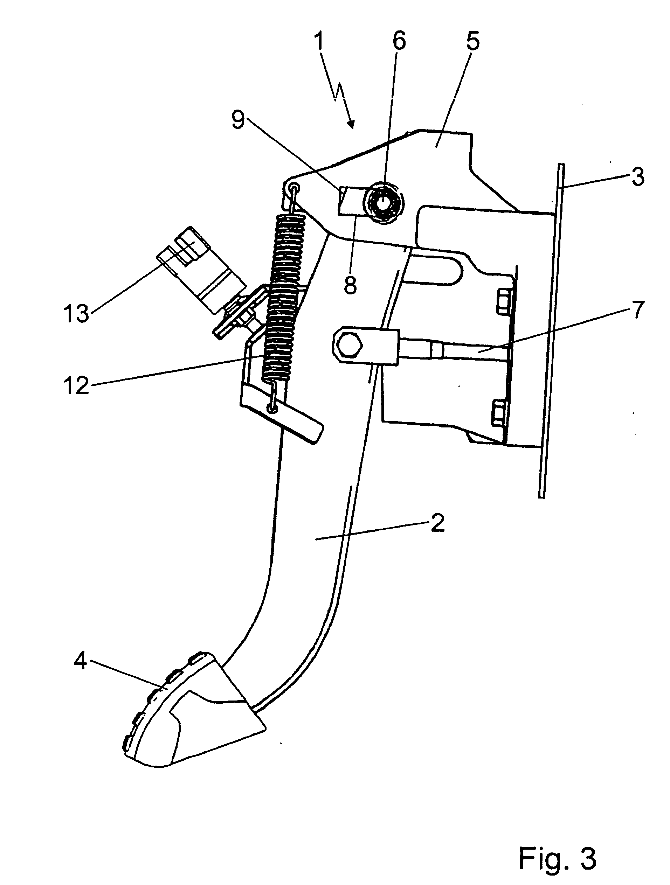

In Fig. 3 ist eine der Fig. 1 und Fig. 2 entsprechende Anordnung der Sicherheitseinrichtung 1 in ihrer Normalstellung in einer seitlichen Ansicht gezeigt. Dabei kann insbesondere die Lage der Pedalachse 6 gut erkannt werden. Um gerade die Lage der Pedalachse 6 richtig erkennen zu können, wurde die Fixierung 11 bei dieser Darstellung nicht dargestellt.

Die Fixierung 11 kann dabei gemäß einer bevorzugten Ausführungsform der Erfindung, was jedoch in den Figuren nicht dargestellt ist, durch die relative Bewegung des Lagerbockes 5 zu einem seine räumliche Lage auch bei einer Frontalkollision im wesentlichen unverändert beibehaltenden Fahrzeugteil aufgehoben werden. Das heißt also, daß die Fixierung an einem solchen seine Lage bei einer Frontalkollision im wesentlichen beibehalten Fahrzeugteil befestigt ist und dadurch aufgehoben wird, daß sich der Lagerbock 5 bewegt und das feste Teil nicht.

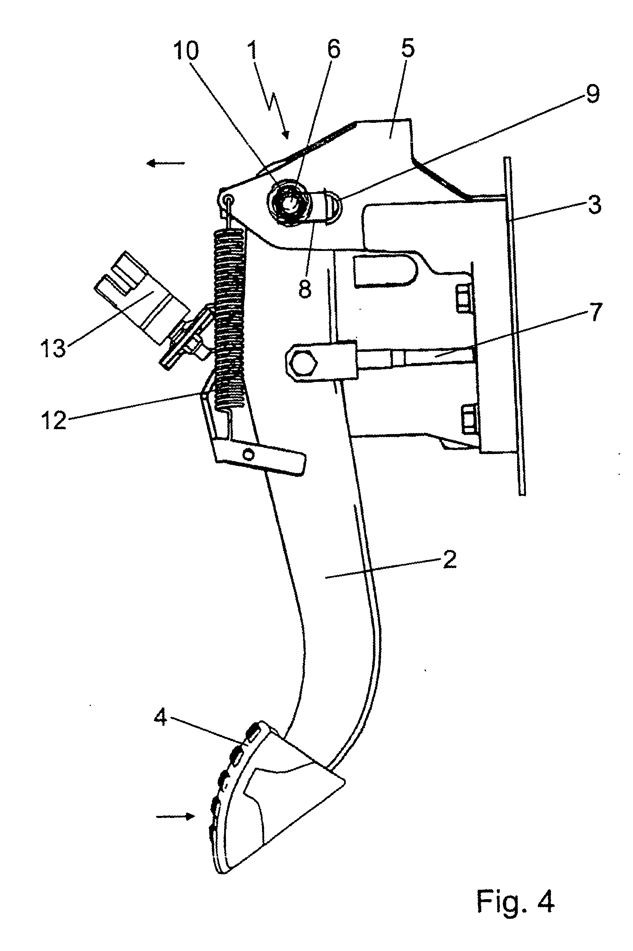

Eine der Fig. 3 entsprechende Darstellung, wobei jedoch die Stellung des Pedals 2 gezeigt ist, nachdem die Fixierung 11 aufgehoben wurde, zeigt Fig. 4.

Die in der Fig. 3 und Fig. 4 nicht dargestellte Fixierung 11 wird im Falle einer Frontalkollision aufgehoben, wodurch die Pedalachse 6 in der Führung im Lagerbock 8 in Vorwärtsfahrtrichtung gesehen nach hinten laufen kann. Gleichzeitig schwenkt das Pedal 2 nach vorne aus. Als Fixpunkt ist dabei dann die Anbindung des Pedals 2 an die Druckstange 7 anzusehen, um die das Pedal 2 verschwenkt werden kann. Das Nachvornelaufen des Pedals 2 kann dabei kraftlos erfolgen. Die Bewegung des Pedals 2 nach dem Aufheben der Fixierung 11 nach einer Frontalkollision ist in der Fig. 4 durch die Pfeile dargestellt.

Mit der gezeigten Sicherheitseinrichtung 1 ist das Pedal 2 nun nicht mehr fixiert, und somit kann es nicht zu Fußeinschnürungen und Verklemmungen des Fahrzeuginsassen führen.

Des weiteren kann das Pedal 2 auch nicht einfach unkontrolliert in den Fahrgastinnenraum hineinlaufen und damit zu Beeinträchtigungen des Fahrzeuginsassen führen.

Über die Veränderung der Länge der Führung 8 im Lagerbock 5 kann auch der dem Pedal 2 zur Verfügung stehende Weg nach vorne verändert werden und so an die jeweiligen Fahrzeuggegebenheiten angepaßt werden.

Gemäß einer bevorzugten Ausführungsform der vorliegenden Erfindung ist das seine räumliche Lage bei einer Frontalkollision im wesentlichen unverändert beibehaltende Fahrzeugteil ein karosseriefestes Fahrzeugteil.

Dabei kann dieses karosseriefeste Fahrzeugteil beispielsweise ein Querträger sein oder auch ein Armaturentafelträger. Bei beiden Fahrzeugteilen handelt es sich um die in Vorwärtsfahrtrichtung gesehen hinter der dem Pedal 2 angeordnete Fahrzeugteile, die bei einer Frontalkollision üblicherweise im wesentlichen fahrzeugfest sind oder zumindest erst bei sehr starken Unfällen beeinträchtigt werden.

Wie der Fig. 1 und Fig. 2 zu entnehmen ist, weist die sich zumindest in horizontaler Richtung erstreckende Führung 8 im Lagerbock 5 im wesentlichen die Form eines Rechteckes aus. Ebenso könnte sie aber auch als ein Langloch ausgebildet sein.

Durch Verändern der Länge der Führung 8, beispielsweise der Länge des Langloches oder Rechteckes kann, wie schon beschrieben wurde, der bei einer Frontalkollision zur Verfügung stehende Pedalweg nach vorne verändert werden und so an die jeweiligen Fahrzeuggegebenheiten angepaßt werden.

Eine Gestaltung der Führung 8 in Form eines Langloches hat sich deshalb als vorteilhaft erwiesen, da sie sehr einfach geschaffen werden kann und darüber hinaus auch sehr einfach wieder in eine dem Stand der Technik entsprechende Form zurückgebildet werden kann, wenn eine Sicherheitseinrichtung 1 gemäß der vorliegenden Erfindung nicht mehr gewünscht wird, denn dann kann es beispielsweise einfach derart wieder verkleinert werden, indem es aufgefüllt wird, und dann wieder die Form einer üblichen Bohrung aufweist.

Gemäß einer bevorzugten Ausführungsform der Erfindung kann das Vorlaufen der Pedalachse 6 in der Führung 8 des Lagerbockes 5 in Vorwärtsfahrtrichtung gesehen nach hinten bei einer Frontalkollision auch durch eine zusätzliche Feder unterstützt werden, so daß sich das Pedal 2 auch tatsächlich nach hinten bewegt, sobald die Fixierung 11 aufgehoben wurde. Eine solche Ausführungsform hat sich insbesondere dann als vorteilhaft erwiesen, wenn andere Einheiten des Fahrzeuges die korrekte Auslösung der erfindungsgemäßen Sicherheitseinrichtung 1 überwachen und nur dann erkennen können, daß eine Aufhebung der Fixierung 11 stattgefunden hat, wenn das Pedal 2 sich in der Führung 8 im Lagerbock 5 auch tatsächlich in Vorwärtsfahrtrichtung gesehen nach hinten bewegt hat.

Es soll aber betont werden, daß eine Feder für eine erfindungsgemäße Sicherheitseinrichtung 1 nicht unbedingt notwendig ist, da das Pedal 2 nach dem Lösen der Fixierung 11 immer bewegt werden kann, und daher ein Verklemmen des Fußes eines Insassen nicht mehr möglich ist. Die bevorzugte Ausführungsform, die eine Feder aufweist, soll nur beispielsweise bei einer Meßaussage, die die Pedalposition mißt, verwendet werden, damit dort richtige Aussagen gemacht werden können.

Wie nun der Fig. 1 und auch der Fig. 2 weiter zu entnehmen ist, weist eine erfindungsgemäße Sicherheitseinrichtung 1 eine Fixierung 11 der Pedalachse 6 derart auf, daß an dem, bei einer Frontalkollision im wesentlichen seine Position beibehaltende, Fahrzeugteil Auslösehebel vorgesehen sind. So können diese Auslösehebel beispielsweise einen Anschlag an der Karosserie aufweisen.

Bewegt sich nun der Pedallagerbock 5 bei einer Frontalkollision durch die Verformung der Spritz- oder Querwand 3 in Richtung des Fahrzeuginnenraumes, so kann die als Auslösehebel ausgebildete Fixierung 11 der Pedalachse 6 dadurch ausgelöst werden, daß sich das Fahrzeugteil, das seine räumliche Lage auch bei einer Frontalkollision im wesentlichen unverändert beibehält, relativ zum Pedallagerbock 5 bewegt. Dadurch wird die Fixierung 11, die vorzugsweise Auslösehebel darstellen, gelöst. Durch die beschriebene relative Bewegung können die an einem fahrzeugfesten Teil angelenkten Auslösehebel beispielsweise in einfacher Art und Weise weggeklappt werden.

Gemäß einer weiteren bevorzugten Ausführungsform der vorliegenden Erfindung kann die Fixierung 11 jedoch auch hilfskraftbetätigt ausgelöst werden. Dabei könnte es ebenso vorgesehen sein, daß ein Sensor einen Frontalunfall mißt, und dann über hydraulische, pneumatische oder auch pyrotechnische Mittel die Fixierung 11 gelöst wird.

Betrachtet man nun nochmals die Fig. 3 und Fig. 4 genau, so ist einfach zu erkennen, daß die Bremsstange 7 in der Grundstellung wie auch in der Auslösestellung immer mit dem Pedal 2 in Verbindung bleibt. Bei dieser Fixierung 11 der Bremsstange 7 am Pedal 2 handelt es sich auch in der Auslösestellung um einen Art Drehpunkt, um den das Pedal 2 bei einer Auslösung pendeln kann. Somit wird ein Verklemmen eines Fußes eines Fahrzeuginsassen verhindert.

Dadurch daß die Bremsstange 7 nicht vom Pedal 2 gelöst wird, und auch die Pedalachse 6 zumindest noch eine gewisse Lagerung, wenn auch nicht eine an einem festen Punkt fixierte Lagerung, aufweist, ist es weiterhin möglich, auf die Bremsstange 7 eine Kraft auszuüben. Dies ist zwar unter Umständen nicht immer vollständig möglich, zumindest die Möglichkeit einer Teilbremsung bleibt aber weiterhin erhalten.

Findet nun bei einem Fahrzeug eine Frontalkollision statt, würde die Sicherheitseinrichtung 1 gemäß der vorliegenden Erfindung aktiviert werden. Nach dieser Frontalkollision wäre es denkbar, daß das Fahrzeug auf die Gegenfahrbahn geschleudert wird, sich auf einem Fahrbahnbereich befindet, auf dem noch ein Verkehrfluß stattfindet, oder auf einen solchen zu gelangen droht oder auch auf Fußgängerwege gelangen könnte. Dabei kann es sehr wichtig sein, daß das Fahrzeug trotz des Auslösens der Sicherheitseinrichtung 1, die ein Verklemmen des Fahrerfußes verhindert, noch gebremst werden kann und das Fahrzeug gebremst werden kann, noch bevor es beispielsweise auf die Gegenfahrbahn weiter rollt. Dadurch kann unter Umständen eine zweite Kollision verhindert werden.

Somit kann bei der erfindungsgemäßen Sicherheitseinrichtung 1 nicht nur die Sicherheit für die Fahrzeuginsassen selbst, sondern auch die Sicherheit für andere Verkehrsteilnehmer erhöht werden.

Die vorliegende erfindungsgemäße Sicherheitseinrichtung 1 hat sich insbesondere auch deshalb als vorteilhaft erwiesen, da sie durch eine sehr einfache konstruktive Gestaltung ein sehr hohes Maß an Sicherheit für die Fahrzeuginsassen und außenstehende Unfallbeteiligte bietet.

Die Sicherheitseinrichtung 1 kann gemäß der vorliegenden Erfindung derart ausgebildet sein, daß der Pedallagerbock 5, wie auch bisher bei Pedalwerken des Standes der Technik, üblicherweise aus Kunststoff ausgebildet ist. Dadurch kann die bisher verwendete innovative Leichtbautechnik des Pedallagerbocks 5 auch bei einer erfindungsgemäßen Sicherheitseinrichtung 1 verwendet werden, wodurch neben einer einfachen Konstruktion auch keine unnötigen Erhöhungen des Gewichts des Fahrzeugs und damit der Betriebskosten durch die Sicherheitseinrichtung 1 die Folge sind.

Darüber hinaus kann das Pedal 2, und dabei insbesondere das Bremspedal, wie üblicherweise als ein Zweischalenpedal ausgebildet sein. Dies bedeutet, daß das üblicherweise schon verwendete Pedal 2, nämlich ein aus zwei tiefgezogenen Stahlhalbschalen gebildetes Pedal 2 auch bei einer Anordnung gemäß der vorliegenden Erfindung weiter verwendet werden kann. Damit liegen die Vorteile dieses sich als sehr torsionssteif erwiesenen Pedals 2 auch in einer erfindungsgemäßen Anordnung weiter vor.

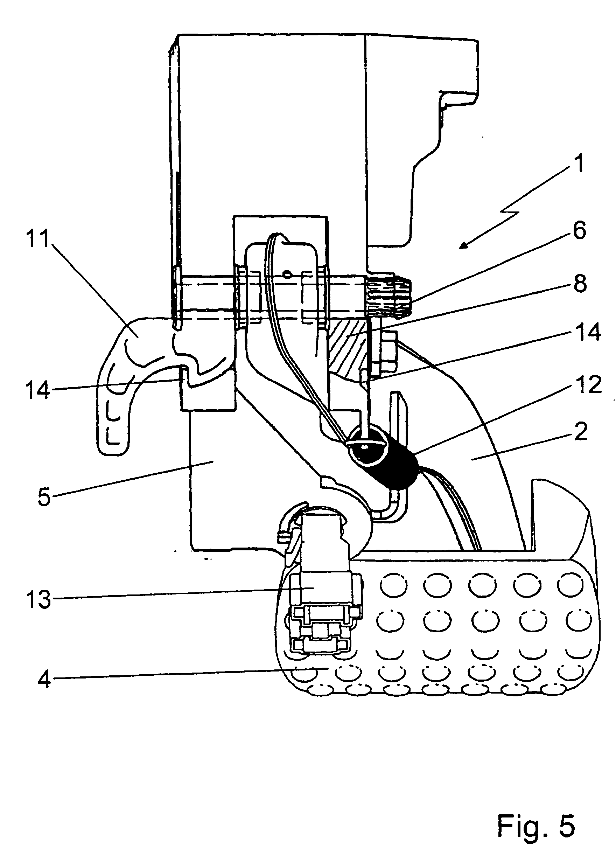

In der Fig. 5 ist noch eine Draufsicht auf eine Darstellung der Sicherheitseinrichtung 1 entsprechend der Fig. 2 gezeigt, wobei auf einer Seite ein Auslösehebel 11 dargestellt ist, der das Langloch 8 schließt. Die andere Seite ist ohne Auslösehebel 11 dargestllt und zwar nur mit der Pedallagerache 6 in dem Langloch 8. Der Auslösehebel 11 ist, wie der Darstellung in Fig. 5 zu entnehmen ist, in seiner das Langloch 8 schließenden Stellung so angeordnet, daß er in Richtung der Fahrgastzelle gesehen vor der Pedallagerachse 6 angeordnet ist. Findet nun ein Auslösen des Hebels 11 durch eine Verformung der Stirnwand 3 statt, dann wird der Hebel 11 herausgezogen und dadurch der Wandbereich 14 abgebrochen. Somit kann über die Stärke des Wandbereichs 14 die Auslösekraft der Fixierung 11 verändert werden.

## Patentansprüche

1. Sicherheitseinrichtung (1) für die Lagerung von Pedalen in Kraftfahrzeugen, mit einem Lagerbock (5), der in einem sich bei einer Frontalkollision des Fahrzeugs spürbar in einen Fahrgastraum hinein verformenden Wandbereich einer Spritz- oder Querwand (3) angeordnet ist, wobei in dem Lagerbock (5) eine Pedalachse (6) mindestens eines auf eine Druckstange (7) einwirkenden, schwenkbaren Pedals (2) gehaltert ist, wobei die Pedalachse (6) im Lagerbock (5) in einer sich zumindest im wesentlichen horizontal erstreckenden Führung (8) gehaltert ist, wobei die Führung (8) in horizontaler Richtung jeweils Begrenzungen (9) aufweist und wobei die Pedalachse (6) während des Normalbetriebes in einer in Vorwärtsfahrtrichtung gesehen vorderen Position der Führung (8) mittels einer Fixierung (11) gehalten ist,
**dadurch gekennzeichnet,**
**dass** die gegenüber den Puhrungabegrenzungen (9) separate Fixierung (11) bei einer Frontalkollision aufgehoben wird, so dass das Pedal (2) nicht mehr fixiert gelagert ist und sich die Pedalachse (6) zwischen den Führungsbegrenzungen (9) bewegen kann.

2. Sicherheitseinrichtung nach Anspruch 1,
**dadurch gekennzeichnet,**
**daß** die Fixierung (11) durch eine relative Bewegung des Lagerbockes (5) zu einem seine räumliche Lage auch bei einer Frontalkollision im wesentlichen unverändert beibehaltenden Fahrzeugteil aufgehoben wird.

3. Sicherheitseinrichtung nach Anspruch 1,
**dadurch gekennzeichnet,**
**daß** das seine räumliche Lage bei einer Frontalkollision im wesentlichen unverändert beibehaltende Fahrzeugteil karosseriefest ist.

4. Sicherheitseinrichtung nach Anspruch 3,
**dadurch gekennzeichnet,**
**daß** das karosseriefeste Fahrzeugteil ein Querträger ist.

5. Sicherheitseinrichtung nach Anspruch 3,
**dadurch gekennzeichnet,**
**daß** das karosseriefeste Fahrzeugteil ein Armaturentafelträger ist.

6. Sicherheitseinrichtung nach Anspruch 1,
**dadurch gekennzeichnet,**
**daß** die sich zumindest im wesentlichen horizontal erstrekkende Führung (8) im Lagerbock (5) im wesentlichen die Form eines Langloches aufweist.

7. Sicherheitseinrichtung nach Anspruch 1,
**dadurch gekennzeichnet,**
**daß** ein Bewegen der Pedalachse (6) in der Führung (8) in Vorwärtsfahrtrichtung gesehen nach hinten bei einer Frontalkollision durch eine Feder unterstützt wird.

8. Sicherheitseinrichtung nach Anspruch 1,
**dadurch gekennzeichnet,**
**daß** die Fixierung (11) der Pedalachse (6) durch an dem bei einer Frontalkollision im wesentlichen seine Position beibehaltenden Fahrzeugteil befestigte Auslösehebel erfolgt.

9. Sicherheitseinrichtung nach Anspruch 8,
**dadurch gekennzeichnet,**
**daß** die Fixierung (11) durch die relative Bewegung des Pedallagerbockes (5) zum bei einer Frontalkollision im wesentlichen seine Position beibehaltenden Fahrzeugteil ausgelöst werden.

10. Sicherheitseinrichtung nach Anspruch 1,
**dadurch gekennzeichnet,**
**daß** die Fixierung (11) hilfskraftbetätigt ausgelöst wird.

11. Sicherheitseinrichtung nach Anspruch 1,
**dadurch gekennzeichnet,**
**daß** der Pedallagerbock (5) aus Kunststoff ausgebildet ist.

12. Sicherheitseinrichtung nach Anspruch 1,
**dadurch gekennzeichnet,**
**daß** das Pedal (2) als ein Zweischalenpedal ausgebildet ist.

## Claims

1. Safety device (1) for the support of pedals in motor vehicles, with a bracket support (5) arranged in a wall area of a splash wall or bulkhead (3) that is noticeably deformed into a passenger compartment in the event of a vehicle head-on collision, a pedal pivot shaft (6) of at least one swivelling pedal (2) acting on a push rod (7) being mounted in the bracket support (5), the pedal pivot shaft (6) being mounted in the bracket support (5) in a guide (8) extending at least basically horizontally, the guide (8) having limits (9) in each horizontal direction and the pedal pivot shaft (6) in normal operation being held in a forward position of the guide (8), viewed in the forward direction of travel, by means of a fixing (11),
**characterized in that**
the fixing (11), which is separate from the guide limits (9), is neutralized in the event of a head-on collision, so that the pedal (2) is no longer mounted in a fixed fashion, and the pedal pivot shaft (6) can move between the guide limits (9).

2. Safety device according to Claim 1,
**characterized in that**
the fixing (11) is neutralized by a movement of the bracket support (5) relative to a part of the vehicle that retains its spatial position basically unchanged even in the event of a head-on collision.

3. Safety device according to Claim 1,
**characterized in that**
the vehicle part basically retaining its spatial position unchanged in the event of a head-on collision is fixed to the body.

4. Safety device according to Claim 3, **characterized in that**
the vehicle part fixed to the body is a cross member.

5. Safety device according to Claim 3, **characterized in that**
the vehicle part fixed to the body is a dashboard cross member.

6. Safety device according to Claim 1, **characterized in that**
the guide (8) in the bracket support (5), extending at least basically horizontally, basically takes the shape of an elongated hole.

7. Safety device according to Claim 1, **characterized in that**
a rearward movement of the pedal pivot shaft (6) in the guide (8), viewed in the forward direction of travel, in the event of a head-on collision is assisted by a spring.

8. Safety device according to Claim 1,
**characterized in that**
the fixing (11) of the pedal pivot shaft (6) is achieved by release levers fixed to the part of the vehicle that basically retains its position in the event of a head-on collision.

9. Safety device according to Claim 8, **characterized in that**
the fixing (11) is released by movement of the pedal bracket support (5) relative to the part of the vehicle that basically retains its position in the event of a head-on collision.

10. Safety device according to Claim 1, **characterized in that**
the fixing (11) is released assisted by an auxiliary force.

11. Safety device according to Claim 1, **characterized in that**
the pedal bracket support (5) is formed from plastic.

12. Safety device according to Claim 1, **characterized in that**
the pedal (2) is designed as a double-shell pedal.

## Revendications

1. Dispositif de sécurité (1) pour le support sur paliers de pédales dans des véhicules automobiles, comprenant un palier (5) qui est disposé dans une région de paroi d'un tablier ou d'une paroi transversale (3), se déformant de manière sensible vers l'intérieur de l'habitacle d'un véhicule en cas de collision frontale du véhicule, un axe de pédale (6) d'au moins une pédale pivotante (2) agissant sur une tige de pression (7) étant fixé dans le palier (5), l'axe de pédale (6) dans le palier (5) étant fixé dans une glissière (8) s'étendant au moins sensiblement horizontalement, la glissière (8) présentant dans la direction horizontale des limitations (9) respectives et l'axe de pédale (6) étant fixé pendant le fonctionnement normal dans une position avant de la glissière (8), vue dans la direction d'avance de déplacement, au moyen d'une fixation (11),
**caractérisé en ce que**
la fixation (11) séparée par rapport aux limitations de la glissière (9) est soulevée en cas de collision frontale, de sorte que la pédale (2) n'est plus supportée fixement et que l'axe de pédale (6) peut se déplacer entre les limitations de la glissière (9).

2. Dispositif de sécurité selon la revendication 1,
**caractérisé en ce que**
la fixation (11) est soulevée par un mouvement relatif du palier (5) par rapport à une partie du véhicule conservant sa position spatiale sensiblement inchangée même en cas de collision frontale.

3. Dispositif de sécurité selon la revendication 1,
**caractérisé en ce que**
la partie du véhicule conservant sa position spatiale sensiblement inchangée en cas de collision frontale est fixée à la carrosserie.

4. Dispositif de sécurité selon la revendication 3,
**caractérisé en ce que**
la partie du véhicule fixée à la carrosserie est un support transversal.

5. Dispositif de sécurité selon la revendication 3,
**caractérisé en ce que**
la partie du véhicule fixée à la carrosserie est un support de tableau de bord.

6. Dispositif de sécurité selon la revendication 1,
**caractérisé en ce que**
la glissière (8) s'étendant au moins sensiblement horizontalement dans le palier (5) présente sensiblement la forme d'un trou oblong.

7. Dispositif de sécurité selon la revendication 1,
**caractérisé en ce**
**qu'** un mouvement de l'axe de pédale (6) dans la glissière (8) vers l'arrière, vu dans la direction d'avance de déplacement, en cas de collision frontale, est supporté par un ressort.

8. Dispositif de sécurité selon la revendication 1,
**caractérisé en ce que**
la fixation (11) de l'axe de pédale (6) s'effectue par des leviers de déclenchement fixés sur la partie du véhicule conservant sensiblement sa position en cas de collision frontale.

9. Dispositif de sécurité selon la revendication 8,
**caractérisé en ce que**
la fixation (11) est desserrée par le mouvement relatif du palier (5) de la pédale par rapport à la partie du véhicule conservant sensiblement sa position en cas de collision frontale.

10. Dispositif de sécurité selon la revendication 1,
**caractérisé en ce que**
la fixation (11) est desserrée sous l'effet d'une force auxiliaire.

11. Dispositif de sécurité selon la revendication 1,
**caractérisé en ce que**
le palier (5) de la pédale est en plastique.

12. Dispositif de sécurité selon la revendication 1,
**caractérisé en ce que**
la pédale (2) est réalisée sous forme de pédale à deux coques.
